# EUROPEAN PATENT APPLICATION

(11) **EP 4 811 305 A1**
(43) Date of publication of application: **23.09.2026**
(21) Application number: 26164907.3
(22) Date of filing: 16.03.2026
(51) Int. Cl.: G06V 10/82, G06V 10/80, G06V 10/84, G06V 20/40

(54) **METHOD AND DEVICE FOR EVENT-PROCESSING**

(30) Priority: 17.03.2025 FR 2502642
(71) Applicant: Commissariat à l'Energie Atomique et aux Energies Alternatives, 75015 Paris (FR); Prophesee, 75012 Paris (FR)
(72) Inventor: MESQUIDA, Thomas, 38054 GRENOBLE CEDEX 09 (FR); DALGATY, Thomas, 38054 GRENOBLE CEDEX 09 (FR); DAMPFHOFFER, Manon, 38054 GRENOBLE CEDEX 09 (FR); JOUBERT, Damien, 92350 LE PLESSIS ROBINSON (FR)
(74) Representative: Cabinet Beaumont

(57) **Abstract**

The present disclosure relates to a method of event processing, based on event data captured by an event-based sensor, the method comprising, in response to the reception of a new event ((x,y,t,p)):
1) extracting a set of features ((F0,F1,...,Fn)) of the new event;
2) modifying the set of features to include current values of a further set of features ((F0",F1",...,Fn")); and
3) computing a result based on the modified set of features,
wherein the method further comprises updating, at time intervals, the current values of the further set of features by:
- sorting received events into groups of events according to their event data value; and
- computing the current values of the further set of features according to the event data value of events from one or more of the groups selected based on a time interval and/or event data value of the events of the groups.

## Description

### Technical field

The present disclosure relates generally to the field of event-based data processing, and in particular to a method and device for processing event-based data generated by an event-based sensor.

### Background art

Event-based sensors are used for various applications, and are particularly adapted to environments where the input data is sparse. Indeed, an event-based sensor provides significant power saving in such environments when compared to a synchronous sensor that samples input data periodically, even when there is no significant input signal. Furthermore, event-based sensors permit a high data compression rate.

For example, event-cameras are different from regular frame-based cameras in that, instead of each pixel periodically integrating charge and recording a light intensity, event-pixels generate binary events in an asynchronous fashion upon light intensity changes. This allows for a massive compression of the information pertaining to movement within a scene. The same principle can be applied to other sensing modalities too - for example, event-based audio.

While convolutional neural networks (CNNs) and, more recently, vision transformers, offer an excellent means of solving computer vision tasks based on frames, they are not naturally compatible with event-based data. In order to process event data using such models, events are often integrated into so-called dense-frames by, for example, counting the number of events generated per pixel within a given time window. However, this does not allow the sparse nature and low-latency of event data to be leveraged. Furthermore, while these approaches allow existing CNN architectures, and their optimized hardware implementations, to be reused, the fine spatiotemporal detail captured by event cameras is effectively discarded. This can lead to a performance degradation, particularly for applications such as optical flow prediction. Furthermore, dense-frame CNNs do not readily leverage the inherent sparsity of event-data to reduce computational requirements.

There is a need in the art for an improved device and method capable of processing event data in real-time or near real-time, for example to enable processing tightly coupled with the event-sensor.

### Summary of Invention

According to one aspect, there is provided a method of event processing, by a data processing device, based on event data captured by an event-based sensor, the method comprising, in response to the reception of a new event from the event-based sensor:
1) extracting, by the data processing device, from a first group of events comprising the new event, a set of features of the new event, wherein each event comprises a time stamp and an event data value having one or more dimensions;
2) modifying the set of features of the new event to include current values of a further set of features; and
3) computing a result based on the modified set of features of the new event,
wherein the method further comprises updating, at time intervals, the current values of the further set of features by:
- during each time interval, sorting received events into second groups of events according to their event data value; and
- computing the current values of the further set of features according to the event data value of events from one or more of the second groups selected based on a time interval and/or event data value of the events of the second groups.

According to one embodiment, the time intervals are regular.

According to one embodiment, the method further comprises constructing, between 1) and 2), by the data processing device, an event graph comprising a first node representing the new event, further nodes, and edges linking each further node to the first node.

According to one embodiment, the further nodes represent past events.

According to one embodiment, the edges of the event graph are unidirectional, from the further nodes to the new event.

According to one embodiment, a graph neural network is used to modify the set of features of the new event.

According to one embodiment, the new event is received during a first time interval and the current values of the further set of features are computed based on events that have been received two time intervals before the first time interval.

According to one embodiment, the new event is received during a first time interval and the current values of the further set of features are computed based on events that have been received one time interval before the first time interval or during the first time interval.

According to one embodiment, the new event is received during a first time interval and the current values of the further set of features are computed based on events that have been received three time intervals, or more, before the first time interval.

According to one embodiment, the current values of the further set of features are computed using a network comprising multiple layers.

According to one embodiment, the method further comprises:
- the reception, by the data processing device, of a frame captured by a frame-based sensor;
- computing the current values of the further set of features additionally based on pixel values of the captured frame.

According to one embodiment, the result is computed with a processing delay of less than one hundred microseconds, and preferably less than five microseconds, from the reception of the new event.

According to a further aspect, there is provided a data processing device configured to:
1) receive a new event captured by an event-based sensor;
2) extract, from a first group of events comprising the new event, a set of features of the new event, wherein each event comprises a time stamp and an event data value having one or more dimensions;
3) modify the set of features of the new event to include current values of a further set of features; and
4) compute a result based on the modified set of features of the new event,
wherein the data processing device is further configured to update, at time intervals, the current values of the further set of features by:
- during each time interval, sorting received events into second groups of events according to their event data value; and
- computing the current values of the further set of features according to the event data value of events from one or more of the second groups selected based on a time interval and/or event data value of the events of the second groups.

According to one embodiment, the time intervals are regular.

According to a further aspect, there is provided an embedded system comprising the data processing device aforementioned and the event-based sensor, wherein the event-based sensor is configured to capture the new event and to send the new event to the data processing device.

### Brief description of drawings

The foregoing features and advantages, as well as others, will be described in detail in the following description of specific embodiments given by way of illustration and not limitation with reference to the accompanying drawings, in which:
Figure 1 schematically illustrates an event-based sensing and processing system according to an example embodiment of the present disclosure;
Figure 2 schematically illustrates an event processing device of Figure 1 in more detail according to an example embodiment of the present disclosure;
Figure 3 is a flow diagram illustrating operations of event-processing according to an example embodiment of the present disclosure;
Figure 4 is a flow diagram illustrating operations of event-processing according to another example embodiment of the present disclosure;
Figure 5 is a graph illustrating an example of an event graph according to an example embodiment of the present disclosure;
Figure 6 schematically illustrates an example of operation of the event-processing method of Figure 3;
Figure 7A schematically illustrates another example of operation of the event-processing method of Figure 3;
Figure 7B schematically illustrates the example of Figure 7A in more detail;
Figure 8 schematically illustrates the example of Figures 7A and 7B in more detail;
Figure 9A is a table illustrating a process with low latency according to an example embodiment of the present disclosure;
Figure 9B is a table illustrating a process with intermediate latency according to an example embodiment of the present disclosure; and
Figure 9C is a table illustrating a process with higher latency according to another example embodiment of the present disclosure.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, devices and methods for event-based sensing are known in the art and have not been described in detail. Furthermore, the training of a graph neural network, the building of a graph and its processing are well known by those skilled in the art and will not be described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

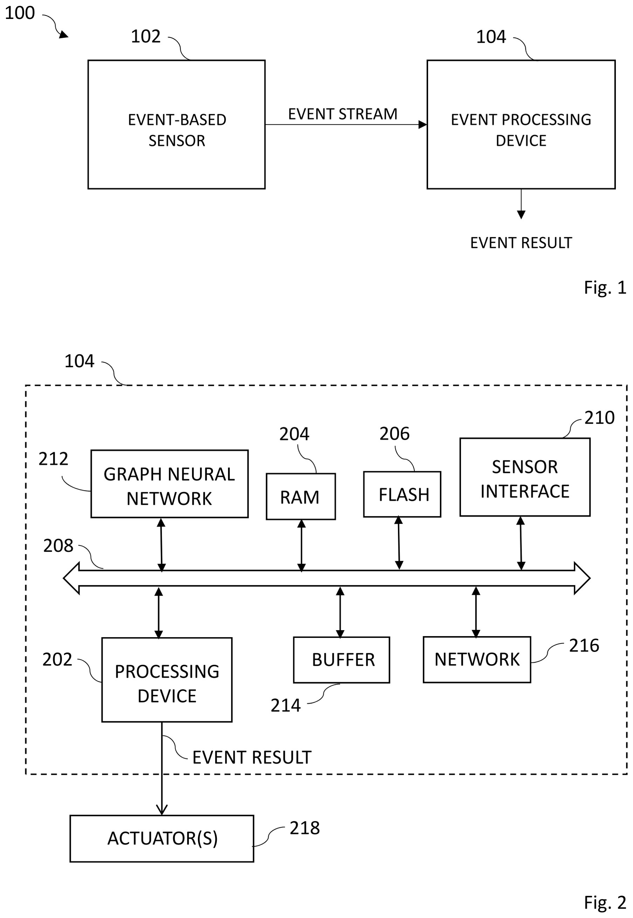

Figure 1 schematically illustrates an event-based sensing and processing system 100 according to an example embodiment of the present disclosure. The system 100 comprises an event-based sensor ("EVENT-BASED SENSOR") 102 configured to generate temporal event data ("EVENT STREAM"), and an event processing device ("EVENT PROCESSING DEVICE") 104 configured to receive the temporal event data and to process it in order to generate a result ("EVENT RESULT").

For example, the event-based sensor 102 is an event-based camera, or event-camera, such as a visible light, or infrared event-camera. Alternatively, the event-based sensor could be an event-based audio sensor, such as an event-based microphone. Other types of event-based sensor would also be possible. The event-based sensor 102 is for example a LIDAR (LIght Detection And Ranging) system or a RADAR (RAdio Detection And Ranging), wherein the temporal event data corresponds to a signal received by a field scan. For example, a field scan is performed by the LIDAR or the RADAR and an event is generated for each object detection.

According to one embodiment where the event-based sensor is a RADAR, a preprocessing step is performed on the received signal to obtain events with a similar structure as the one of events received by a LIDAR.

The temporal event data for example comprises events, each event for example comprising a time stamp t and an event data value (x, y, p) having one or more dimensions. For example, (x,y) corresponds to an identifier, for example to coordinates, and p to a payload, for example to an intensity value. For example, the event data value has three dimensions for an event-based image sensor. For example, the event data value has two dimensions for an event-based audio sensor. For example, the event data value has four or more dimensions for a RADAR or a LIDAR. The event-based sensor 102 is for example configured to generate events with a temporal resolution less than or equal to 10 µs, for example less than or equal to 1 µs. The time stamp t of an event for example corresponds to its generation time by the event-based sensor 102.

For example, events are generated asynchronously on multiple pixels of the event-based sensor 102 and an average number of events per pixel and unit time is for example comprised in the range 1 to 1000 events per pixel and per second, for example in the range 1 to 100 events per pixel and per second, for example in the range 1 to 10 events per pixel and per second.

In comparison, the acquisition rate of a synchronous acquisition system, for example corresponding to the frame rate of a frame-based camera, is for example inferior to 100Hz, that is to say less than 100 frames per second.

Therefore, one advantage of recording and processing asynchronous events is to be able to process a higher rate of events and to be more responsive to an event occurring on one pixel. The frame rate of a synchronous acquisition system limits the temporal resolution of the data generated by the system. The temporal resolution of an asynchronous acquisition system is for example comparable to a synchronous acquisition system having a frame rate in the order of 10⁴ to 10⁵ frames-per-second. In an asynchronous acquisition system, pixels for example have the ability to react in tens of microseconds to a visual stimulus in the scene.

For example, in the case that the event-based sensor 102 is an event-based camera, each pixel of the camera records events independently and the event data value is for example the address (x, y) of the pixel that captured the event, and the event is, for example, generated upon a light-level change exceeding a threshold relative to the light-level when the previous event at the pixel was generated. Additionally, a detected light level of the pixel could provide a further dimension of the event data value, for example the polarity p of the change or the absolute light-level at the moment the event was generated. In the case that the event-based sensor 102 is a microphone, events are for example generated due to relative changes in the analogue signal generated by the microphone and the features of each event may also comprise the absolute value of the signal and/or, if the signal is filtered into many frequency bands, the range of the frequency band of the event.

The event-based processing device 104 is a data processing device, for example configured to process the temporal event data in real-time or close to real-time, for example with a processing delay of less than one thousand microseconds, and preferably less than one hundred microseconds. For example, a latency corresponds to a few clock cycles and the event-based processing device 104 comprises one or more short buffers, the buffers being for example about one hundred microseconds wide.

In the case that the temporal data is visual data, the result of the event processing device 104 is for example an optical flow prediction per generated event, or an object classification for the entire event stream, or an object detection per event. In the case that the temporal data is audio data, the result of the event processing device 104 is for example a key-word spotted per a group of events or a sound class recognition.

Figure 2 schematically illustrates the event processing device 104 of Figure 1 in more detail according to an example embodiment of the present disclosure.

The device 104 for example comprises a processing device ("PROCESSING DEVICE") 202 comprising one or more processors, and one or more memory devices, such as a volatile memory ("RAM") 204 and/or a non-volatile memory ("FLASH") 206. In some embodiments, the volatile memory 204 is a random-access memory, and/or the non-volatile memory 206 is a Flash memory, although other types of volatile and non-volatile memories could be present.

The processing device 202 and memories 204, 206 are for example linked by a bus 208. The non-volatile memory 206 for example stores software code, which is executed by the processing device 202.

The event processing device 104 further comprises, for example, a sensor interface ("SENSOR INTERFACE") 210 coupled to the bus 208, the sensor interface 210 for example being configured to communicate with the event-based sensor 102 over a wired or wireless communications interface.

In some embodiments, the event processing device 104 further comprises a graph neural network ("GRAPH NEURAL NETWORK") 212, which is also for example linked to the bus 208, and is configured to generate a graph based on the temporal event data and for example to generate an event-based prediction.

The graph neural network 212 is for example a hardware circuit configured to implement a method of generating a prediction based on event data captured by the event-based sensor 102. In alternative embodiments, the graph neural network is implemented in software, and the method of generating a prediction based on event data captured by the event-based sensor 102 is implemented by software stored in the memory 204 or 206 and executed by the processing device 202. Alternatively, the processor reads data from the event-based sensor, processes this data and then supplies this data to the graph neural network in the appropriate format to perform event-based prediction.

In some embodiments, the event-based prediction generated by the graph neural network 212 is used by a buffer ("BUFFER") 214 and/or a network ("NETWORK") 216, which are also for example linked to the bus 208. The network 216 is for example a network configured to process a matrix of information, for example a recurrent network, a convolutional network, a transformer, etc. The buffer 214 and/or the network 216 are for example configured to process the event-based prediction generated by the graph neural network 212 and to compute a knowledge frame. The knowledge frame is for example transmitted to the processing device 202. The processing device 202 is for example configured to generate the result based on the knowledge frame and the event-based prediction generated by the graph neural network 212.

In some embodiments, the result ("EVENT RESULT") generated by the event processing device 104 is used to control one or more actuators (ACTUATOR(S)) 218 coupled to the device 104. The one or more actuators 218 for example comprise a robotic system, such as a robotic arm trained to pull up weeds, or to pick ripe fruit from a tree, an automatic steering or breaking systems in a vehicle, or an electronic actuator, which is for example configured to control the operation of one or more circuits, such as waking up a circuit from sleep mode, causing a circuit to enter into a sleep mode, causing a circuit to generate a text output, to perform a data encoding or decoding operation, etc. According to a further example, the device 104 comprises an eye-tracking unit that determines the area in a scene where a user is looking and controls the actuators as a function of the determined area, for example in order to change the focus of the device 104.

According to some embodiments, the event processing device 104 is comprised in an embedded system, for example a relatively small device such as a hearing aid device, an eye-tracking device, a robotic arm, etc. The event processing device 104 is for example comprised in a module of a self-driving car or a drone. The event processing device 104 is for example used for monitoring or in a system configured to generate augmented reality or virtual reality streams of images.

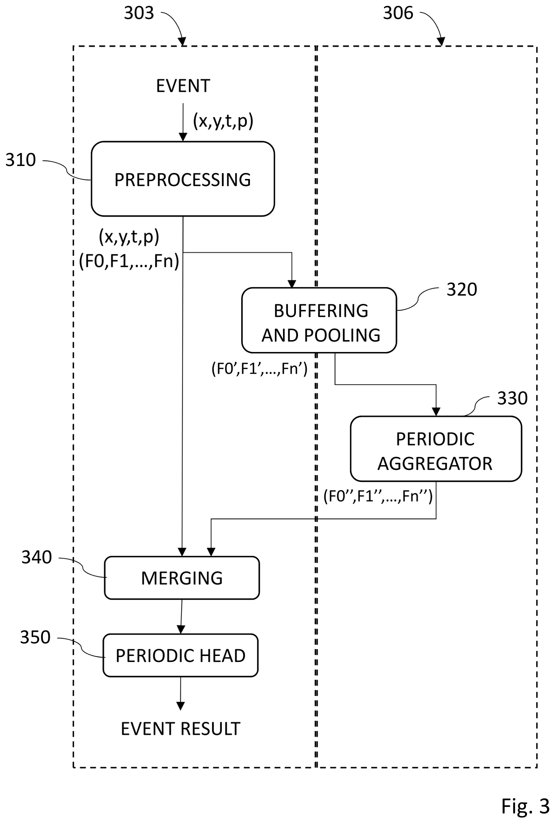

Figure 3 is a flow diagram illustrating operations of event-processing according to an example embodiment of the present disclosure.

The operations illustrated in Figure 3 are for example executed by the event processing device 104 detailed in relation with Figure 1 and Figure 2.

According to a preferred embodiment, event-processing comprises asynchronous operations, performed for example in response to the generation of an event, and further comprises synchronous or periodic operations performed in parallel to the asynchronous flow. One operation for example involves receiving asynchronous inputs and is configured to compute a periodic, synchronous output. In Figure 3, a first dotted box 303 corresponds to asynchronous processing steps and a second dotted box 306 corresponds to synchronous or periodic processing steps, which are for example timed based on a clock signal (not illustrated). For example, the asynchronous operations are also synchronous, with a low temporal resolution, in the order of the microsecond, that corresponds to the generation of an event comprising a time stamp.

Initially, the event processing device 104 receives a new event ("EVENT") of the temporal event data, for example generated by the event-based sensor 102 of Figure 1 or by a preprocessing means. The new event is for example a vector ("(x, y, t, p)") comprising a time stamp t and the event data value. In the example of an event-based image sensor, the event data value is for example a set of coordinates (x, y) of the pixel that has recorded the new event and a polarity value p corresponding to the direction of light intensity variation. The new event is for example received asynchronously.

In a step 310 ("PREPROCESSING") following the reception of the new event by the event processing device 104, the new event is processed to extract a set of features (" (F0, F1, ..., Fn)") of the new event. For example, past events that have previously been received and processed by the event processing device 104 are used, in combination with the new event, to compute the set of features. Each past event is for example a vector having a similar structure to the vector of the new event. The step 310 is for example performed asynchronously, in response to the reception of the new event by the event processing device 104.

According to one embodiment, each feature of the set of features (F0, F1, ..., Fn) of the new event is computed, for example by the processing device 202 of the event processing device 104, by applying an operation to the new event and to a set of previous events. Each event of the set of previous events is referred to herein as a neighbor of the new event. The neighbors are for example chosen amongst past events, for example according to the time stamp and/or the set of coordinates (x, y) of each past event. For example, the neighbors are chosen according to a proximity criterion. The operation applied to the new event and to a set of previous events to generate the features (F0, F1, ..., Fn) is for example a function, for example a mean function, a max function, etc.

According to a preferred embodiment, a graph neural network, for example the graph neural network 212 of the event processing device 104, is used in the step 310.

In some embodiments, the step 310 comprises a step of building an event graph. Each node of the event graph for example corresponds to an event of the temporal event data. For example, a previous version of the event graph formed of previously received events linked by edges is for example updated to include the new event. Edges are for example created between the new event and its neighbors. In some embodiments, the edges are unidirectional edges and are for example only input edges for the new event, that is to say that the data sharing that will take place along those edges will only go from the neighbors to the new event. Events of the temporal event data are for example saved in a memory, which will be referred to herein as a past-event buffer, of the event processing device 104, for example in the volatile memory 204 and/or in the non-volatile memory 206. The neighbors connected to the new event are for example selected amongst the past events. According to one embodiment, a distance criterion is used to select, among the past events, the events that are spatially and/or temporally closest to the new event. For example, in embodiments where an event is defined by (x, y, t, p), past events that are within a volume, characterized by a maximum distance along x, y and t dimensions, are preselected. The neighbors are then for example selected amongst these preselected events using a second criterion, for example randomly, or based on a minimum distance between the preselected past events and the new event along one axis, or based on a maximum distance between the preselected past events and the new event along one axis, etc. According to another embodiment, a fixed number of past events are read from the past-event buffer and become the neighbors.

The step 310 also for example comprises processing the event graph. Graph processing for example relies on information contained in the nodes and edges of the graph. According to an embodiment in which the edges are unidirectional and information is passed from the neighbors to the new event, the new event is for example processed after its neighbors have already been processed during a previous execution of the step 310. Thus, a set of features has for example already been computed for each neighbor and is stored in a memory of the event processing device 104.

A feature F0 of the set of features of the new event for example corresponds to the new event:
[Math 1] $F 0 = \left(x, y, t, p\right) .$

Likewise, features F0 of the neighbors of the new event for example correspond to the event (*xᵢ*, *yᵢ*, *tᵢ*, *pᵢ*) of each neighbor i.

A feature F1 of the set of features of the new event is for example calculated using a first layer of a graph neural network (GNN) as follows:
[Math 2] $F 1 = {g}_{1} \left({\sum }_{i ∈ Neighbors} {f}_{1} \left({x}_{i}, {y}_{i}, {t}_{i}, {p}_{i}\right)\right)$
with (*xᵢ*, *yᵢ*, *tᵢ*, *pᵢ*) the feature F0 of the neighbor i, and with f₁ and g₁ being two functions. The functions f₁ and g₁ for example each comprise one or more learnable parameters. The function f₁ is for example different to the function g₁.

Likewise, features F1 of the neighbors of the new event have for example been computed using a similar first layer of the GNN.

A feature F2 of the set of features of the new event is for example calculated using a second layer of the graph neural network (GNN) as follows:
[Math 3] $F 2 = {g}_{2} \left({\sum }_{i ∈ Neighbors} {f}_{2} \left(F{1}_{i}\right)\right)$
with F1*ᵢ* the feature F1 of the neighbor i, and with f₂ and g₂ being two functions. The functions f₂ and g₂ for example each comprise one or more learnable parameters. The function f₂ is for example the same as the function f₁, and different to the function g₂. Alternatively, the function f₂ is different from the functions f₁, g₁ and g₂. The function g₂ is for example the same as the function g₁, and different to the function f₂. Alternatively, the function g₂ is different from the functions f₁, g₁ and f₂.

Likewise, features F2 of the neighbors of the new event have for example been computed using a similar second layer of the GNN.

Further features F3 to Fn of the set of features of the new event are for example computed using additional layers of the graph neural network (GNN) to generate the set of features (F0, F1, ..., Fn).

The features F1, F2, ..., Fn are for example vectors that can have any dimension, for example depending on the functions used in the graph neural network (GNN).

Although a sum is used in the example equations (2) and (3), other functions can be used, for example min, max, average, etc.

In a step 320 ("POOLING") following the step 310, a frame is for example built using events including the new event. The step 320 is for example at the interface between the asynchronous processing steps of the first dotted box 303 and the synchronous processing steps of the second dotted box 306. Indeed, events are received asynchronously at this step and frames are for example built synchronously or periodically, and output in a synchronous manner.

During the step 320, events that are for example received over a fixed time window, or in other words over a fixed time interval, are for example pooled, or in other words aggregated together, to create the frame. The fixed time window for example has a duration comprised in the range 1 ms to 100 ms and for example has a duration approximatively equal to 10 ms.

Frames are for example generated periodically, at regular time intervals, using the step 320.

According to another embodiment, the time window is not fixed and events are not received during a fixed time interval. For example, a frame is generated after a fixed number of events have been received.

According to one embodiment, the event-based sensor 102 is divided into sections, and events that are received by the event-based sensor 102 over time are for example grouped according to the section of the sensor they are received in.

Dimensions of the sections are for example defined by a user. According to some embodiments, for each section, a corresponding multi-dimensional cell is defined as having a volume equal to the section area multiplied by the fixed duration time window. The cells form a multi-dimensional grid.

For example, in embodiments where the event-based sensor 102 is a camera, the sections are for example rectangular of x pixels in width and y pixels in height, each section for example having an area of x.y pixels. For example, x and y are each comprised in the range 1 to 12 pixels and the sections are for example square, with x and y being equal to each other, and being equal to 8 in one example. The corresponding cells for example have three dimensions x, y and t, and are defined by the volume x.y.t, with t the duration of the fixed time window.

For example, in embodiments where the event-based sensor 102 is a microphone, the sections are defined by a frequency range Δf. The corresponding cells then for example have two dimensions Δf and t, and are defined by an area: Δf.t.

Each cell of the grid is for example filled with the events that have been received within the corresponding region of the event-based sensor and over the last fixed time window. Each cell of the grid for example contains zero events, a single event, or multiple events.

During the step 320, for each cell, events of the cell and their corresponding set of features (F0, F1, ..., Fn) are for example pooled into one pooled set of features (F0', F1', ..., Fn') and the frame is built. The frame is for example a matrix comprising one vector, corresponding to a pooled set of features, for each cell. The resulting frame is for example associated with a time value corresponding to a current time window and each cell of the resulting frame is for example associated with a coordinate value.

According to one embodiment:
- if there is no event in a cell, the pooled set of features is a vector full of zeros;
- if there is a single event in a cell, the pooled set of features is the set of features of the single event; and
- if there are multiple events in a cell, a single set of features is extracted, for example using a function such as a mean function, a min function, a max function, etc.

According to one embodiment, events that are received over the fixed time window are stored in a buffer, for example the buffer 214 of the event processing device 104 and described in relation with Figure 2, during the fixed time window. At the end of the fixed time window, the events that have been received over the fixed time window are grouped in the grid, according to their event data value, and a pooled set of features is computed for each cell of the grid. The frame is built and is for example sent to the network 216 of the event processing device 104 and the buffer is for example cleared. In this embodiment, the events are sorted and the frame is built periodically and synchronously, at the end of the fixed time window.

According to another embodiment, each event is associated to its corresponding cell, according to its event data value, upon reception of the event and after computation of its set of features. In this embodiment, the events are sorted asynchronously and the frame is built periodically and synchronously, at the end of the fixed time window.

Events are received asynchronously at this step, populating the cells for the current time window. Once the current time window is passed, the corresponding frame is computed and sent to the rest of the synchronous computation. Frames are for example generated periodically at the step 320. The duration of the fixed time window is for example related to the rate of computation of the following synchronous processing.

In a step 330 ("PERIODIC AGGREGATOR") following the step 320, a knowledge frame is for example generated. The step 330 is for example performed periodically.

During the step 330, a current frame generated by the step 320 is for example analyzed to extract information, for example to infer a global meaning of the received events and build a knowledge frame.

The step 330 is for example performed by the network 216 of the event processing device 104. The network 216 is for example implemented by hardware, by dedicated circuits, and/or at least partially by software comprising instructions stored in an instruction memory and executed by a suitable processor of the network 216.

The network 216 is a network configured to process an information matrix. For example, the network 216 is a recurrent network, for example a recurrent neural network (RNN), a gated recurrent unit (GRU), a long short-term memory (LSTM), etc. The network 216 is for example a convolutional variant of a recurrent network and is for example a convolutional neural network (CNN). The network 216 is for example a State Space Models (SSM), Attention, or uses for example a Mamba or Transformer architecture.

The network 216 is not limited to the examples cited above and is for example a combination of networks. Any block configured to receive frames as an input and able to compute a meaningful information from the frames can be used. The network 216 may use artificial intelligence or not.

The network 216 for example has an internal memory and extracts information about each vector of the current frame using one or multiple layers to take into account multiple vectors of the current frame and/or the same cell of the current and past frames. Using one or multiple layers over multiple vectors increases the range of event data values that are taken into account. Using one or multiple layers over multiple frames increases the temporal window that is taken into account.

The extracted information of each vector is for example processed to build the knowledge frame. According to one embodiment, the knowledge frame has the same structure as the current frame generated by the step 320. For example, the knowledge frame is a matrix comprising a plurality of vectors, wherein each vector (F0", F1", ..., Fn") of the knowledge frame corresponds to the result of the network 216 for one vector of the current frame.

According to other embodiments, the size of the knowledge frame is for example different from the size of the current frame.

In a step 340 ("MERGING") following the step 330, the new event (x, y, t, p) and the set of features (F0, F1, ..., Fn) of the new event are merged with a vector (F0", F1", ..., Fm") of a knowledge frame, built according to the step 330, to generate an enhanced event. The step 340 is for example performed asynchronously by the processing device 202 of the event processing device 104. The dimension m of the vector (F0", F1", ..., Fm") is for example different from the dimension n the set of features (F0, F1, ..., Fn).

The knowledge frame used at this step is for example the knowledge frame generated using events from the temporal event data that have been received by the event-based sensor 102 two time windows prior to the time window during which the new event is received. The steps 320 and 330 are for example performed on these events during the time window prior to the time window during which the new event is received. The knowledge frame is for example stored in a memory of the event processing device 104, for example in the volatile memory 204 and/or in the non-volatile memory 206, at the beginning of the current time window and prior to receiving the new event. This avoids latency and reduces the memory space required. Furthermore, asynchronous events are for example processed asynchronously in the steps 310 and 340. The processing rate is for example similar to the reception rate of the temporal event data by the event-based sensor 102.

To merge the new event and its set of features with a knowledge frame, the vector of the knowledge frame corresponding to the event data value, for example its coordinates in the case of an image sensor, or its frequency in the case of a microphone, is selected and associated with the new event. For example, the new event and the vector are concatenated, combined using an additive function or a multiplicative function, etc.

According to embodiments where the step 310 is performed by the graph neural network 212 and comprises adding the new event to an event graph, the vector of the knowledge frame is for example integrated in the node of the new event, for example using concatenation of the vectors or an additive function or a multiplicative function, etc.

An advantage of the merging step 340 is that the generated enhanced event results from both asynchronous and synchronous processing. Indeed, the set of features (F0, F1, ..., Fn) of the new event corresponds to information about the new event that has been extracted in step 310 using asynchronous processing. The vector of the knowledge frame has been generated using synchronous image processing. The step 340 allows the use of synchronous processing in an asynchronous processing flow. The vector of the knowledge frame for example adds context information, generated using a broader spatial and/or temporal scope, to the set of features that is specific to the new event.

In a step 350 ("PERIODIC HEAD"), following the step 340, the enhanced event is for example used to compute a result ("EVENT RESULT"). The step 350 is for example performed asynchronously.

One or more neural networks, for example a graph neural network (GNN), a fully connected network (FC), etc., are for example used to compute the result.

Using the process detailed in Figure 3, the events generated by the event-based sensor are for example processed at a rate similar to the generation rate of the events.

According to one embodiment, not illustrated in Figure 3, the steps 320 and 330 are duplicated one or more times within the flow of Figure 3. For each iteration, the function and/or the size of the cells used at the step 320 and/or the shape and definition of the network 216 used at the step 330 are for example different, yielding to a different knowledge frame.

The steps 320 and 330 are for example duplicated one or more times sequentially, for example if the computation can be performed within the fixed time window. The merging step 340 is for example duplicated multiple times, once after each duplication of the step 330. The step 320 of each duplication is for example performed on the output data of the previous merging step 340. The step 350 is for example performed after the last merging step 340.

The steps 320 and/or 330 are for example duplicated one or more times in parallel. The merging step 340 is for example performed once, taking as input the knowledge frames generated by the multiple duplications of the step 330.

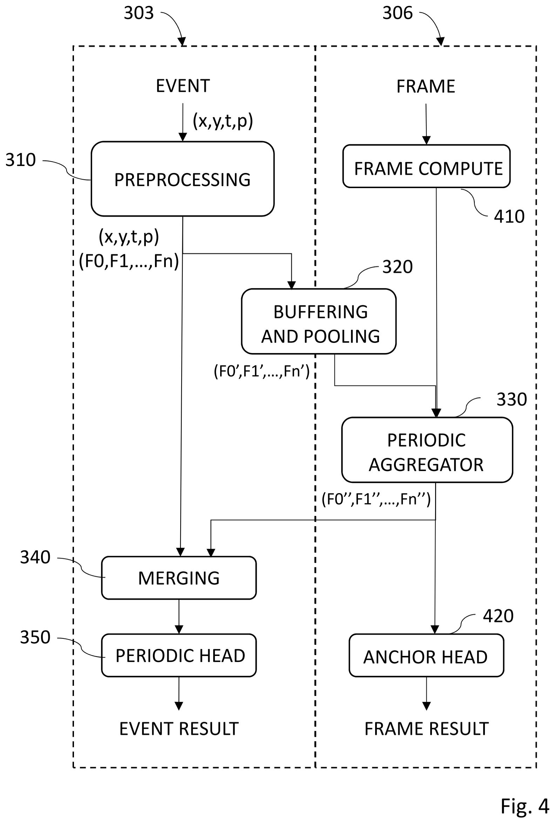

Figure 4 is a flow diagram illustrating operations of event-processing according to another example embodiment of the present disclosure;

Some elements of Figure 4 correspond to elements of Figure 3. These elements have been referenced with the same reference numerals and will not be detailed again.

In addition to the asynchronous events of the temporal event data, camera frames ("FRAME") are for example acquired periodically, for example by a frame-based camera. For example, a vector (r, g, b) is generated for each pixel of the frame-based camera.

The method of Figure 4 for example comprises a step 410 ("FRAME COMPUTE") performed before the step 330. During the step 410, a captured camera frame is for example preprocessed, for example by a neural network, for example by a computer vision neural network.

The preprocessed camera frame is for example sent to the network 216 of the event processing device 104 detailed in relation with Figure 2. The network 216, during the step 330, for example processes the preprocessed camera frame together with the frame generated at step 320. The processing rate of the network 216 is for example the same as or different to the preprocessing rate performed at step 410.

The method of Figure 4 for example comprises a step 420 ("ANCHOR HEAD") performed after step 330, the knowledge frame generated at step 330 is provided ("FRAME RESULT") as an output of the event processing device 104. The knowledge frame for example gives complementary information, for example coarser information, than the result ("EVENT RESULT") of the asynchronous process.

According to some embodiments, the method of Figure 4 comprises the step 410 and the step 420.

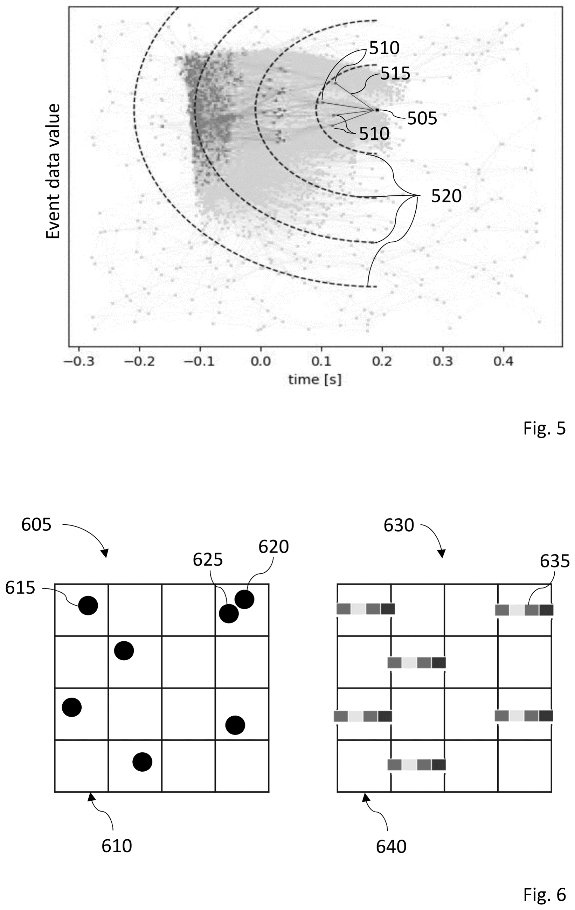

Figure 5 illustrates an example of an event graph according to an example embodiment of the present disclosure.

According to some embodiments, the step 310 detailed in relation with Figure 3 comprises the generation of an event graph.

Each event in the event graph is for example represented by a node in the graph and is positioned according to its event data value ("event data value") (x, y, p), as described in relation with Figure 1, and its time stamp ("time [s]") in seconds.

A new event 505 is for example connected to its neighbors 510 by edges 515. Its neighbors 510 are for example events that have been received before the arrival of the new event.

The obtained event graph is for example processed with a graph neural network (GNN) as described in relation with the step 310 of Figure 3 to extract relevant information.

Each neighbor for example has its own neighbors to which it is connected via edges. Therefore, the set of features that is computed for each neighbor contains information about the event data value of its neighbors and their own neighbors as well.

However, the receptive field of the GNN is for example limited in space and time. Indeed, the geometric size of a filter in each layer, that is to say the maximum distance from which a node can receive information, is finite. Thus, accumulating such layers also produces a finite receptive field.

The dotted lines 520 illustrate a temporal limit of the receptive field of the GNN. The temporal limit is increased with each additional layer of the GNN. Similarly, the receptive field of the GNN has a spatial limit, although not illustrated in Figure 5.

During the step 330 detailed in relation with Figure 3, using one or multiple layers in the network 216 to take into account multiple vectors of the current frame, and/or the same cell of the current and past frames, broadens receptive field spatially and/or temporally at a later step of the processing.

Figure 6 schematically illustrates the step 320 of the event-processing method of Figure 3.

A table 605 represents the grid generated during the step 320. The grid 605 is composed of a plurality of multi-dimensional cells 610. Events that are received over the fixed time window are accumulated in the cells 610. Each event 615, 620, 625 is represented by a dot and is associated with a cell according to its event data value, for example according to its coordinates. Between zero and multiple events are associated to each cell over the fixed time window.

During the step 320, a frame 630 is built from the grid 605. A vector 635 is generated for each cell 610 of the grid 605. Each cell 640 of the frame 630 for example corresponds to a cell 610 of the grid 605. Each vector 635 of the frame 630 is associated with one cell of the frame and corresponds to the zero to multiple events that have occurred in the corresponding cell of the grid 605, during the fixed time window. In the example of Figure 6, the vector referenced 635 is generated from the two events referenced 620 and 625.

If there is no event in a cell 610 of the grid 605, the vector generated for that cell is for example a null vector and is not shown in Figure 6.

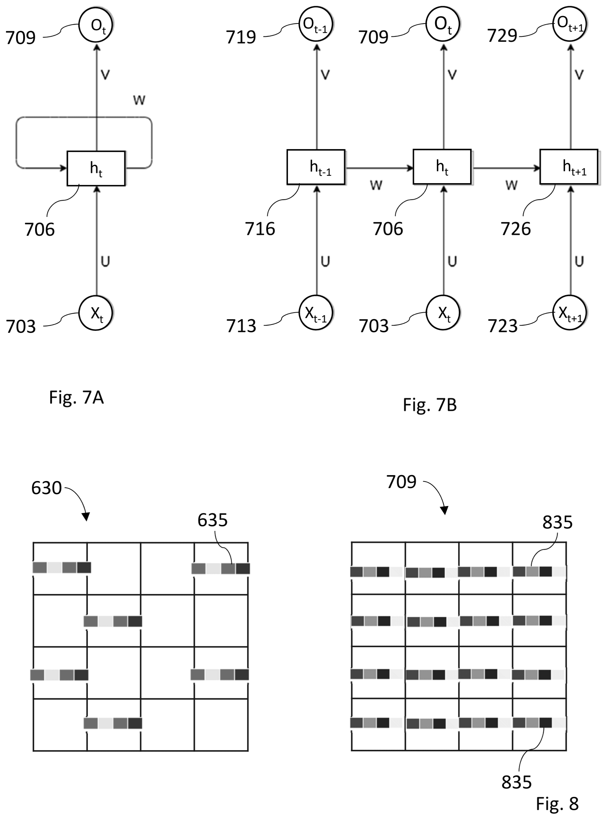

Figure 7A schematically illustrates the step 330 of the event-processing method of Figure 3 according to one embodiment of the present disclosure.

Figure 7A illustrates the unrolling in time of an example of a recurrent network. According to one embodiment, a recurrent network can be defined by two equations:
hₜ=f(hₜ₋₁, Xt) and Oₜ=g(ht), where Xt is an input vector, hₜ is a hidden vector, Ot is an output vector and f and g are functions that for example include learnable parameters.

In the example of Figure 7A, the implementation corresponds to the operations: hₜ=W.hₜ₋₁+U.Xₜ and Oₜ=V.hₜ, where:
- the input vector Xt is a pooled frame 703, for example generated at the end of the step 320, for example the frame 630, and corresponding to an input of step 330, during a time window t;
- the hidden vector hₜ is a memory frame 706 stored in memory and updated at each time window;
- the output vector Ot is a generated knowledge frame 709, for example generated at the end of the step 330; and
- W, U and V are matrices of learnable parameters.

The network 216, detailed in relation with Figure 2 to Figure 4, is for example a recurrent network configured to apply the operations illustrated in Figure 7A. A first layer of the network 216 is applied to the pooled frame 703. Optionally, although not illustrated in Figure 7A, a camera frame, acquired by frame-based sensor, is also received by the network 216 and the first layer of the network 216 is also applied to the camera frame. The network 216 outputs the knowledge frame 709.

Figure 7B schematically illustrates the operation of Figure 7A in more detail.

In the examples of Figure 7A and Figure 7B, the network 216 is a recurrent neural network (RNN) and the one or multiple layers of the network 216 have a temporal impact on the receptive field, for example via a recurrence over the hidden vector hₜ. The one or multiple layers for example also have a spatial impact on the receptive field.

In the example of Figure 7B, the operations are detailed over three consecutive time windows t-1, t and t+1.

Operations for the time window t correspond to the operations detailed in Figure 7A. Figure 7B further illustrates operations of the previous time window t-1. According to one embodiment, illustrated in Figure 7B, the time window t-1 is for example the initial time window and: hₜ₋₁=U.Xₜ₋₁ and Oₜ₋₁=V.hₜ₋₁ with:
- Xₜ₋₁ a pooled frame 713, for example generated at the end of the step 320 and corresponding to an input of step 330, during the time window t-1;
- hₜ₋₁ a memory frame 716 stored in memory during the time window t-1; and
- Oₜ₋₁ a generated knowledge frame 719, for example generated at the end of the step 330 during the time window t-1.

Figure 7B further illustrates operations of the following time window t+1: hₜ₊₁= W.hₜ+U.Xₜ₊₁ and Oₜ₊₁=V.hₜ₊₁ with:
- Xₜ₊₁ a pooled frame 723, for example generated at the end of the step 320 and corresponding to an input of step 330, during the time window t+1;
- hₜ₊₁ a memory frame 726 stored in memory during the time window t+1; and
- Oₜ₊₁ a generated knowledge frame 729, for example generated at the end of the step 330 during the time window t+1.

The knowledge frames 709, 719 and 729 are for example saved in a memory of the event processing device 104, for example in one of the memories 204, 206.

The use of the one or more layers in the network 216 broadens the receptive field resulting from the step 310 by using information comprised in frames generated during previous time windows and/or using vectors generated from events that have different event data values and that for example have different coordinates.

Figure 8 schematically illustrates the step 330 of the event-processing method of Figure 3.

The frame 630 detailed in relation with Figure 6 and resulting from the step 320 is illustrated. The frame 630 is for example generated as a matrix and each cell comprises a vector. However, for example in the case that no event has occurred within a cell over the fixed time window, a vector can be null.

At the end of the step 330, the knowledge frame is generated, for example the knowledge frame 709 detailed in relation with Figure 7A and Figure 7B. The knowledge frame 709 is for example a matrix, for example with the same dimensions as the frame 630. Vectors 835 of the knowledge frame are for example not null since other cells and/or past frames are used during the generation of the knowledge frame 709.

In the various embodiments described herein, the event processing device 104 extracts information from the temporal event data, aggregates it through time and/or space, and sends back some of this knowledge for further asynchronous computation without additional latency on the asynchronous event processing.

In the various embodiments described herein, the duration of the fixed time window is for example defined according to the application of the event-based sensor and/or according to the nature of the events. For example, in applications where a sparse detection of events is expected, a relatively long fixed time window is defined. Conversely, in applications where a dense detection of events is expected, a relatively short fixed time window is defined. The fixed time window is for example set by a frame rate of a frame-based camera if camera frames from a frame-based camera are used. If the fixed time window is relatively long, the steps 320 and 330, detailed in relation with Figure 3 and Figure 4, are for example repeated sequentially without causing a delay in the computation of the knowledge frames.

The process detailed in relation with Figure 3 and Figure 4 is for example applied to a point-cloud artificially created from dense information, for example using a rule to create events from a continuous or discrete flow of dense information. Events are for example created when a convolutional neural network has sufficient, for example higher than a threshold value, information in a cell.

One advantage of the various embodiments detailed in this description is to be able to use both asynchronous event processing and a periodic frame processing in collaboration without adding any latency overhead.

Another advantage is that the process requires relatively little memory space, for example because the step 340 uses a knowledge frame that is already computed and available, which reduces latency and the requirement for memory space. Therefore, the event processing device 104 is for example relatively small and for example does not use a server or a computer.

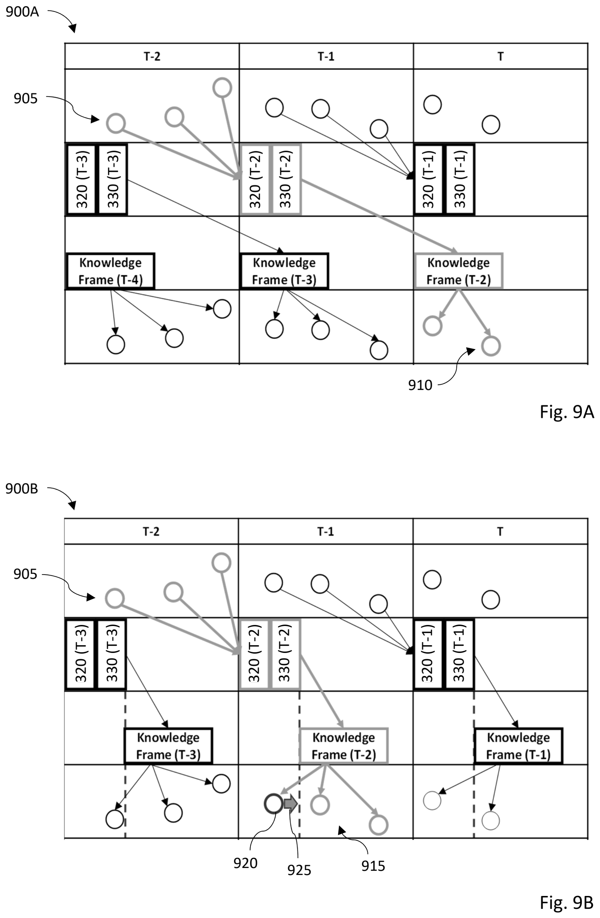

Various embodiments and variants have been described. Those skilled in the art will understand that certain features of these embodiments can be combined and other variants will readily occur to those skilled in the art. In particular, while embodiments have been described in which the merging step 340 is performed using a knowledge frame that was already computed during a previous fixed time window, and is available several time windows after the reception of the new events on which it is based, other embodiments are possible, as detailed in the following Figures 9A to 9C.

Figure 9A is a table 900A illustrating a process wherein the merging step 340, detailed in relation with Figure 3, is performed using a knowledge frame that is already computed and available, and thus latency is relatively low. The latency is defined as the delay between the asynchronous reception of a new event and the output of the corresponding enhanced event based on this new event and on a knowledge frame.

The table 900A illustrates events 905 that are received by the event-based sensor 102 during a first time window "T-2". The step 320 ("320 (T-2)") and the step 330 ("330 (T-2)") are performed on the events 905 during a second time window "T-1", the second time window following the first time window. A first knowledge frame ("Knowledge Frame (T-2)") is generated by the step 330 and is for example stored in memory during the time window T-1. The first knowledge frame is available at the beginning of a third time window T, the third time window following the second time window, and is used, during the merging step 340, on events 910 that have been received during the third time window T.

Other steps ("320 (T-3)", "330 (T-3)", "320 (T-1)", "330 (T-1)", "Knowledge Frame (T-4)", "Knowledge Frame (T-3)") occurring during the time windows T-2, T-1 or T are illustrated.

Figure 9B is a table 900B illustrating a process wherein the merging step 340, detailed in relation with Figure 3, can have some latency.

Some elements of Figure 9B are similar to elements of Figure 9A. These elements are represented with the same references and are not described in detail.

The difference between Figure 9A and Figure 9B is that, in Figure 9B, the first knowledge frame ("Knowledge Frame (T-2)") is used on events 915 that have been received during the second time window T-1 instead of on the events 910 that have been received during the third time window T. An event 920 that is received, at the step 340, before the first knowledge frame is computed, is for example stored in a memory until the first knowledge frame is available. The processing of the event 920 is delayed and latency is induced, as represented by an arrow 925 in Figure 9B. In this embodiment, only part of the events 915 will be delayed during their processing and the induced latency is inferior or equal to the duration of a time window.

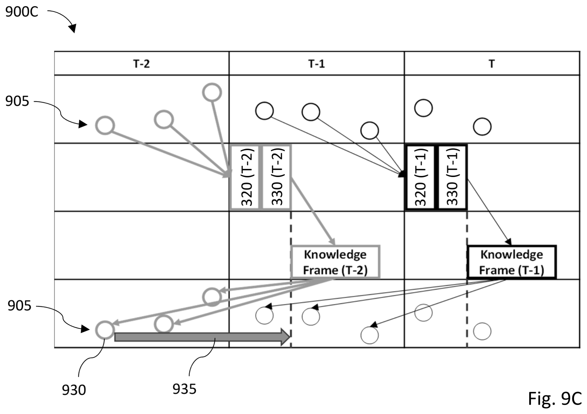

Figure 9C is a table 900C illustrating a process wherein the merging step 340, detailed in relation with Figure 3, can have relatively high latency.

Some elements of Figure 9C are similar to elements of Figure 9A or Figure 9B. These elements are represented with the same references and are not described in detail.

The difference between Figure 9C and Figure 9A is that, in Figure 9C, the first knowledge frame ("Knowledge Frame (T-2)") is used on the events 905 that have been received during the first time window T-2 instead of on the events 910 that have been received during the third time window T. An event 930 that is received, at the step 340, before the first knowledge frame is computed, is for example stored in a memory until the first knowledge frame is available. The processing of the event 920 is delayed and latency is induced, as represented by an arrow 935 in Figure 9C. In this embodiment, all the events 905 will be delayed during their processing and the induced latency is superior to the duration of a time window. An advantage of this embodiment is to have a knowledge frame that has been computed using the event 930 to process the event 930 at the step 340. Therefore, the knowledge frame is for example more relevant and reliable than in a case in which a knowledge frame is used that was calculated based on events received during a previous fixed time window, like in the examples of Figures 9A and 9B.

Finally, the practical implementation of the embodiments and variants described herein is within the capabilities of those skilled in the art based on the functional description provided hereinabove. For example, although an event is defined by (x, y, t, p) and an event data value is defined by (x, y, p) in these embodiments, they are for example defined by other information in other embodiments. For example, the event data value is defined by (x, y, z, I) with (x, y, z) a three-dimensional set of coordinates and I an intensity value, for example in the case that the event-based sensor 102 is a LIDAR. For example, the event data value comprises local density information.

## Claims

1. A method of event processing, by a data processing device (104), based on event data captured by an event-based sensor (102), the method comprising, in response to the reception of a new event ((x,y,t,p)) from the event-based sensor (102):
1) extracting, by the data processing device (104), from a first group of events comprising the new event, a set of features ((F0,F1,...,Fn)) of the new event, wherein each event comprises a time stamp (t) and an event data value ((x,y,p)) having one or more dimensions;
2) modifying the set of features of the new event to include current values of a further set of features ((F0",F1",...,Fn")); and
3) computing a result based on the modified set of features of the new event,
wherein the method further comprises updating, at time intervals, the current values of the further set of features ((F0",F1",...,Fn")) by:
- during each time interval, sorting received events into second groups of events according to their event data value; and
- computing the current values of the further set of features ((F0", F1",,...,Fn")) according to the event data value of events from one or more of the second groups selected based on a time interval and/or event data value of the events of the second groups.

2. The method according to claim 1, wherein the time intervals are regular.

3. The method according to claim 1 or 2, further comprising constructing, between 1) and 2), by the data processing device (104), an event graph comprising a first node (505) representing the new event ((x,y,t,p)), further nodes (510), and edges (515) linking each further node to the first node.

4. The method according to claim 3, wherein the further nodes (510) represent past events.

5. The method according to any of claims 2 to 4, wherein the edges (515) of the event graph are unidirectional, from the further nodes (510) to the new event ((x,y,t,p)).

6. The method according to any of claims 2 to 5, wherein a graph neural network (212) is used to modify the set of features of the new event.

7. The method according to any of claims 1 to 6, wherein the new event ((x,y,t,p)) is received during a first time interval and the current values of the further set of features ((F0", F1",,...,Fn")) are computed based on events that have been received two time intervals before the first time interval.

8. The method according to any of claims 1 to 6, wherein the new event ((x,y,t,p)) is received during a first time interval and the current values of the further set of features ((F0",F1",,...,Fn")) are computed based on events that have been received one time interval before the first time interval or during the first time interval.

9. The method according to any of claims 1 to 6, wherein the new event ((x,y,t,p)) is received during a first time interval and the current values of the further set of features ((F0",F1",,...,Fn")) are computed based on events that have been received three time intervals, or more, before the first time interval.

10. The method according to any of claims 1 to 9, wherein the current values of the further set of features are computed using a network (216) comprising multiple layers.

11. The method according to any of claims 1 to 10, further comprising:
- the reception, by the data processing device (104), of a frame captured by a frame-based sensor;
- computing the current values of the further set of features additionally based on pixel values of the captured frame.

12. The method according to any of claims 1 to 11, wherein the result is computed with a processing delay of less than one hundred microseconds, and preferably less than five microseconds, from the reception of the new event.

13. Data processing device (104) configured to:
1) receive a new event ((x,y,t,p)) captured by an event-based sensor (102);
2) extract, from a first group of events comprising the new event, a set of features ((F0,F1,...,Fn)) of the new event, wherein each event comprises a time stamp (t) and an event data value ((x,y,p)) having one or more dimensions;
3) modify the set of features ((F0,F1,...,Fn)) of the new event to include current values of a further set of features ((F0",F1",,...,Fn")); and
4) compute a result based on the modified set of features of the new event,
wherein the data processing device (104) is further configured to update, at time intervals, the current values of the further set of features ((F0",F1",...,Fn")) by:
- during each time interval, sorting received events into second groups of events according to their event data value; and
- computing the current values of the further set of features ((F0",F1",,...,Fn")) according to the event data value of events from one or more of the second groups selected based on a time interval and/or event data value of the events of the second groups.

14. The data processing device according to claim 13, wherein the time intervals are regular.

15. Embedded system comprising the data processing device (104) of claim 13 or 14 and the event-based sensor (102), wherein the event-based sensor (102) is configured to capture the new event and to send the new event to the data processing device (104).
